## Europäisches Patentamt
## European Patent Office
## Office européen des brevets

(11) Veröffentlichungsnummer: **0 033 847**
**B1**

(12) **EUROPÄISCHE PATENTSCHRIFT**

(45) Veröffentlichungstag der Patentschrift:
**02.05.85**

(21) Anmeldenummer: **81100232.8**

(22) Anmeldetag: **14.01.81**

(51) Int. Cl.⁴: **H 02 P 9/04,** H 02 P 9/42,
H 02 K 7/18

(54) Turbinensatz mit einem ein Netz konstanter Frequenz speisenden Generator.

(30) Priorität: **11.02.80 DE 3005375**
**26.09.80 DE 3037147**

(43) Veröffentlichungstag der Anmeldung:
**19.08.81 Patentblatt 81/33**

(45) Bekanntmachung des Hinweises auf die Patenterteilung:
**02.05.85 Patentblatt 85/18**

(84) Benannte Vertragsstaaten:
**AT CH FR GB IT LI SE**

(56) Entgegenhaltungen:
**AT - B - 180 329**
**DE - A - 2 845 930**
**DE - C - 486 949**
**FR - A - 2 406 093**
**GB - A - 1 106 371**
**US - A - 3 422 275**
**US - A - 3 641 418**

**BULLETIN DES SCHWEIZER ELEKTROTECHNISCHEN VEREINS, Band 69, September 1978 Zürich W. MEIER et al. "Die Entwicklung zur STRAFLO-Turbine" Seiten 943 bis 947**
**Zeitschrift "Solar Energy" Band 20, 1978, No. 2-A, Seiten 109-117**

(73) Patentinhaber: **Siemens Aktiengesellschaft, Berlin und München Wittelsbacherplatz 2, D-8000 München 2 (DE)**

(72) Erfinder: **Spirk, Franz, Schuckertdamm 322, D-1000 Berlin 13 (DE)**

# Beschreibung

Die Erfindung bezieht sich auf einen Turbinensatz mit einer von Wasser durchflossenen Turbine mit nicht verstellbaren Laufschaufeln (Propellerturbine), die mit einem Generator gekuppelt ist, der über einen frequenzregelbaren Stromrichter ein Netz konstanter Frequenz von 50 oder 60 Hz speist, wobei die Drehzahl des Turbinensatzes stufenlos entsprechend dem optimalen Wirkungsgrad bei der abzugebenden elektrischen Leistung und den hydraulischen Verhältnissen einstellbar ist.

In der FR-A-2 406 093 ist ein Turbinensatz, bestehend aus einer von Wasser durchflossenen Turbine mit nicht verstellbaren Laufschaufeln (Propellerturbine) beschrieben, die mit einem Generator gekuppelt ist, der über einen frequenzregelbaren Stromrichter ein Netz konstanter Frequenz speist. Der bekannte Turbinensatz dient für Wasserläufe mit nur geringer Fallhöhe, bei denen die durch den Turbinensatz erzielbare Leistungsabgabe beschränkt ist, so dass durch den Einsatz einer Turbine mit nicht verstellbaren Laufschaufeln eine Vereinfachung der Anordnung und eine Verringerung des Aufwandes erzielt wird und trotz wechselnder Drehzahl eine Abgabe des Stromes mit konstanter Frequenz an das Netz gegeben ist. Weiterhin wird der Wirkungsgrad des Turbinensatzes optimiert, weil die Drehzahl als Funktion der hydraulischen Bedingungen und der abzugebenden elektrischen Leistung gesteuert wird.

Weiterhin ist aus der DE-A-2 845 930 eine Anordnung zur Wandlung kinetischer Energie in elektrische Energie bekannt. Eine von einer Wasserturbine angetriebene Asynchronmaschine mit Schleifringläufer speist ein Netz konstanter Frequenz. Der Läufer der Asynchronmaschine ist über einen statischen Stromrichter mit dem gleichen frequenzkonstanten Netz verbunden wie der Ständer. Dadurch kann die Asynchronmaschine entsprechend der von der Turbine angebotenen Leistung mit variabler Drehzahl betrieben werden. Durch Verwendung eines Kurvenzugrechners ist es möglich, die Turbine im Optimum des jeweiligen Geschwindigkeitsbereiches des Antriebsmediums arbeiten zu lassen. Damit kann die Turbine im gesamten Betriebsbereich stets mit maximal möglichem Wirkungsgrad, d.h. mit höchster Energieausbeute betrieben werden.

Man unterscheidet bei Turbinensätzen zwischen Rohrturbinensätzen, bei denen die Turbine eine horizontale oder schräg gestellte Welle aufweist und Turbinensätzen mit einer Turbine mit vertikaler Welle. Rohrturbinensätze wurden zunächst mit einer Propellerturbine mit feststehenden Laufschaufeln ausgeführt, bei welcher der Läufer des Generators unmittelbar auf dem Aussenkranz des Laufrades der Propellerturbine angeordnet ist. Eine derartige, mechanisch einfach und robust aufgebaute Propellerturbine hat aber den Nachteil, dass wegen der Nichtverstellbarkeit der Laufschaufel und der durch den Generator bedingten konstanten Drehzahl die Teillastwirkungsgrade sehr schlecht sind. Man entwickelte dann Axialturbinen mit verstellbaren Laufradschaufeln, Kaplanturbinen, die in Flusskraftwerken mit vorwiegend vertikaler Welle eingesetzt werden. Mit dieser ist der ausserhalb des Strömungsraumes liegende Generator mit ebenfalls vertikaler Welle verbunden. Auch bei Rohrturbinensätzen werden Kaplanturbinen mit verstellbaren Laufschaufeln eingesetzt, bei denen dann der Generator innerhalb eines Strömungskörpers angeordnet ist und von der Welle der Kaplanturbine direkt angetrieben wird. Da dieser Strömungskörper innerhalb des Wasserzuflusses zur Turbine liegt, ist der für den Generator zur Verfügung stehende Raum beschränkt, was Schwierigkeiten hinsichtlich der erreichbaren Leistung des Generators hervorruft. Man hat deshalb auch für einen Rohrturbinensatz mit einer Kaplanturbine die Verwendung eines Aussenkranzgenerators vorgesehen, wobei der Polradkranz des Generators auf dem Aussenkranz der Kaplanturbine gesondert hydrostatisch gelagert ist. Diese Anordnung ist sehr aufwendig.

Weiterhin ist aus der US-A-3 422 275 ein Turbinensatz mit vertikaler Welle bekannt, bei dem die Turbine feststehende Laufräder aufweist und einen Generator antreibt, dessen Ständer auf der Innenseite mit einem wasserdichten Mantel, insbesondere aus verstärktem Kunststoff, versehen ist. Der Generator weist ausserdem einen massiven Läufer auf und kann auch in asynchroner Bauart ausgeführt sein.

Weiterhin ist aus der AT-B-180 329 ein Asynchrongenerator bekannt, dessen Ständerwickelkopf um 90° abgekröpft ist.

Der Erfindung liegt die Aufgabe zugrunde, bei einem Wasserturbinensatz mit einer Propellerturbine, einem Generator und einem Umrichter den Wirkungsgrad und die Ausnutzung des Turbinensatzes zu verbessern.

Zur Lösung dieser Aufgabe ist ein Wasserturbinensatz der eingangs beschriebenen Art gemäss der Erfindung so ausgebildet, dass der Generator mit einer Frequenz kleiner als 20 Hz betrieben wird und dass der frequenzregelbare Umrichter als frequenzregelbarer Direktumrichter ausgebildet ist.

Bei diesem Wasserturbinensatz gemäss der Erfindung wird durch die Verwendung eines Direktumrichters als Frequenzwandler zwischen dem Generator und dem Netz und die Auslegung des Generators mit der niedrigen Frequenz des Direktumrichters von kleiner als 20 Hz eine Verdopplung der Ausnutzung der Maschine erreicht. Er kann nämlich wegen der wesentlich geringeren Wechselstromverluste mit einer höheren Ausnutzungsziffer ausgelegt werden. Diese Ausnutzungsziffer ist bekanntlich dann

$$C = \frac{kVA}{D_i{}^2 L \cdot n}$$

wobei $D_i$ der Bohrungsdurchmesser des Generators, L seine Länge und n seine Drehzahl sowie kVA die abgegebene Scheinleistung bedeutet. Trotz der Notwendigkeit eines Stromrichters ist bei diesem Wasserturbinensatz der Aufwand am niedrigfrequenten Generator und Direktumrichter dem eines normalen 50 oder 60 Hz-Generators entsprechend. Darüber erzielt man eine echte Aufwandeinsparung durch die Verwendung einer Propellerturbine und erhält dennoch bei Teillast einen optimalen Wirkungsgrad durch die Vorgabe der entsprechenden Drehzahl, durch Steuerung der Generatorfrequenz über den Direktumrichter. Man erzielt somit jeweils einen guten Wirkungsgrad und durch Nichtanpassung auftretende Betriebsunsicherheiten, wie z.B. Kavitation, entfallen. Die aufwendige mechanische Regelung eines Turbinenlaufrades über verstellbare Laufschaufeln zur Anpassung an die abzugebende Leistung ist somit durch eine elektrische Drehzahlregelung ersetzt.

Bei einem Turbinensatz gemäss der Erfindung kann der Generator zweckmässigerweise in asynchroner Bauart ausgeführt sein. Zur Vereinfachung des konstruktiven Aufbaus ist es weiterhin vorteilhaft, wenn der Läufer des Generators eine Käfigwicklung aufweist und der Ständer auf der Innenseite mit einem wasserdichten Mantel aus unmagnetischem und elektrisch nicht leitfähigem Material versehen und wasserdicht in das Turbinenrohr eingeflanscht ist. Der gesamte Aussenkranz der Propellerturbine und der darauf befindliche Läufer des Generators liegen also innerhalb des Triebwasserraumes der Turbine. Auf diese Weise werden die während des Betriebes des Generators in der Käfigwicklung des Läufers auftretenden Wärmeverluste durch das Wasser in einfachster Weise abgeführt. Da ausserdem der Ständer des Generators am Innendurchmesser wasserdicht ausgebildet und direkt in das Turbinenrohr eingeflanscht ist, entfallen die bisher erforderlichen rotierenden Dichtungen zwischen dem rotierenden Aussenkranz der Turbine und dem feststehenden Turbinenrohr, bei denen Leckwasserverluste nicht zu vermeiden waren. Ausserdem hat die Anordnung die normalen bekannten Vorteile des Einsatzes einer Asynchronmaschine als Generator, d.h. der Wegfall der Erregereinrichtung und der Stromzuführung zum Läufer über Schleifringe.

Wegen der geringen Frequenz der Asynchronmaschine kann der Läufer des Generators massiv ausgebildet sein. Es empfiehlt sich ferner, zwischen dem Aussenkranz der Propellerturbine und den Flanschen des Turbinenrohres berührungslose Dichtungen, z.B. Labyrinthdichtungen, anzuordnen, um das Eindringen grosser Fremdkörper in den Luftspaltbereich des Generators zu verhindern. Wegen des Druckunterschiedes zwischen dem Wasserein- und -austritt bei der Turbine umströmt das Wasser der Turbine dennoch den gesamten Aussenkranz nebst Käfigwicklung.

Im folgenden sei die Erfindung anhand der in den Figuren 1 bis 5 dargestellten Ausführungsbeispiele noch näher erläutert.

Fig. 1 zeigt, schematisch dargestellt, einen Schnitt durch einen Rohrturbinensatz.

In Fig. 2 ist das Prinzipschaltbild des dort verwendeten Generators dargestellt.

Fig. 3 zeigt einen Schnitt durch einen anderen Rohrturbinensatz,

Fig. 4 einen Schnitt durch einen Turbinensatz mit vertikaler Welle und

Fig. 5 einen konstruktiv etwas anders abgewandelten Rohrturbinensatz, schematisch als Längsschnitt dargestellt.

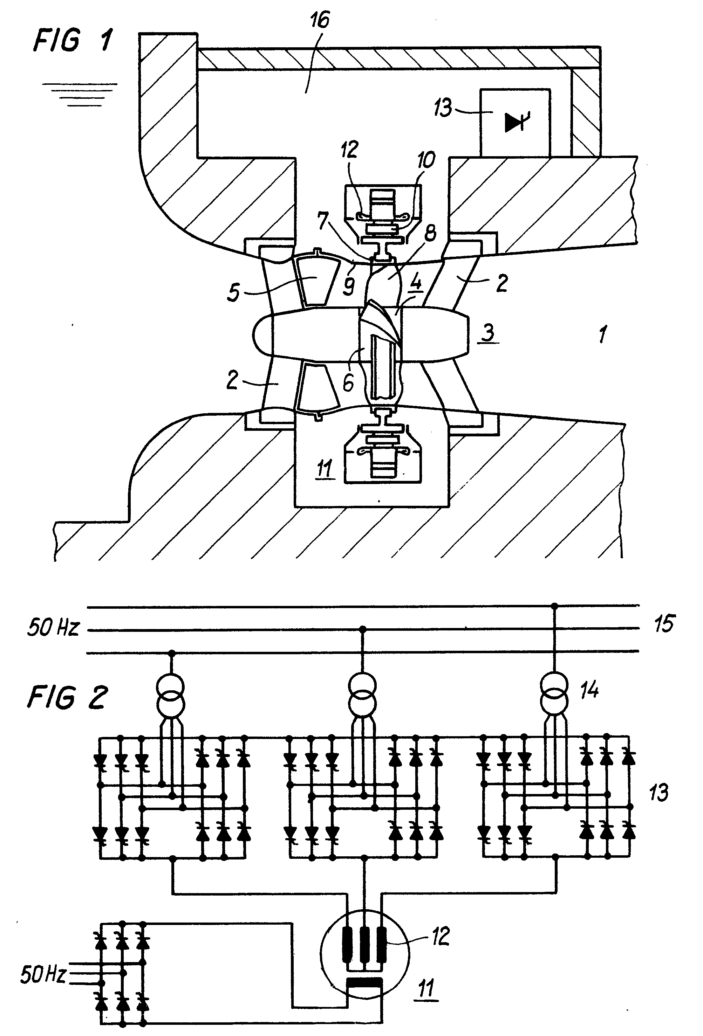

Für gleiche Teile sind jeweils die gleichen Bezugszahlen in den Figuren 1 bis 4 verwendet.

Bei dem Rohrturbinensatz nach Fig. 1 ist in dem rohrähnlichen Triebwasserraum 1 eines Laufkraftwerkes zwischen Stützschaufeln 2 eine Propellerturbine 3 vorgesehen, vor deren Laufrad 4 regulierbare Leitschaufeln 5 angeordnet sind. Das einteilige Laufrad 4 besitzt fest an der Nabe 6 und am Aussenkranz 7 angegossene Laufschaufeln 8. Der Aussenkranz 7 ist gegenüber dem Turbinengehäuse 9 abgedichtet und trägt ausserdem den Rotor 10 des Generators 11.

Die Ständerwicklung 12 des Generators 11 speist über den frequenzregelbaren Direktumrichter 13 und Transformatoren 14 das Netz 15 mit der konstanten Frequenz von 50 Hz. Da der Direktumrichter 13 eine kleine generatorseitige Frequenz hat, ist der Generator 11 für Frequenzen kleiner als 20 Hz bemessen und wesentlich höher ausgenutzt als eine 50-Hz-Maschine. Infolge der Frequenzregelbarkeit des Direktumrichters 13 kann der Generator 11 und die mit ihm verbundene Propellerturbine 3 in der Drehzahl stufenlos frei verändert werden, so dass an der Propellerturbine 3 für jede Belastung die optimale Drehzahl eingestellt werden kann. Man hat somit auch bei Teillasten trotz Verwendung der mechanisch sehr robusten Propellerturbine 3 mit nichtregelbaren Laufschaufeln 5 einen sehr guten Wirkungsgrad bei Teillastbetrieb. Der Direktumrichter 13 ist im Maschinenhaus 16 des Rohrturbinensatzes untergebracht, die Verbindungsleitungen zwischen dem Generator 11, dem Direktumrichter 13 sowie den Transformatoren 14 und die Zuleitungen zum Netz 15 sind nicht dargestellt, aber in allgemein üblicher Weise ausgeführt.

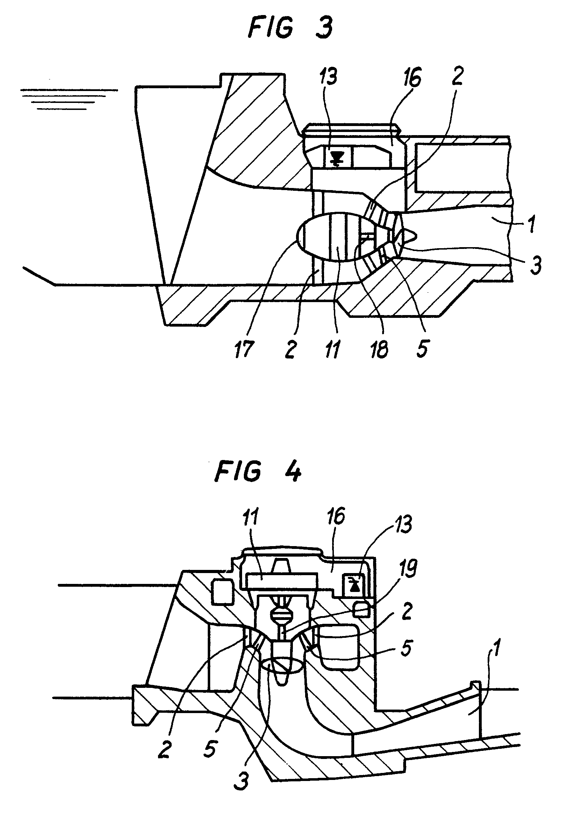

Fig. 3 zeigt ein Laufkraftwerk mit einem anderen Rohrturbinensatz, bei dem im Triebwasserraum 1 über Stützschaufeln 2 ein Strömungskörper 17 angeordnet ist, an dessen Ende die Propellerturbine 3 liegt. Die horizontal verlaufende Welle 18 der Propellerturbine 3 treibt ebenfalls den innerhalb des Stützkörpers 17 befindlichen, nur schematisch angedeuteten Generator 11 an. Auch hier ist der Direktumrichter 13 innerhalb des Maschinenhauses 16 untergebracht.

In Fig. 4 ist schliesslich ein Turbinensatz mit einer vertikalen Welle dargestellt. Auch hier ist die Axialturbine mit der vertikalen Welle 19 als Propellerturbine 3 ausgebildet, und die Welle 19 treibt den Generator 11 an. Der Direktumrichter 13 ist wiederum im Maschinenhaus 16 untergebracht. Durch die Verwendung einer Propellerturbine 3 anstelle einer bei derartigen Turbinensätzen mit vertikaler Welle bisher üblichen Kaplanturbine ist der hydraulische Teil wesentlich vereinfacht. Trotzdem erfordert dies keinen wesentlichen zusätzlichen Aufwand hinsichtlich der nun elektrisch über den Direktumrichter 13 vorgenommenen Drehzahlregelung des Turbinensatzes, da der Direktumrichter 13 genügend Platz innerhalb des vorhandenen Maschinengehäuses 16 findet.

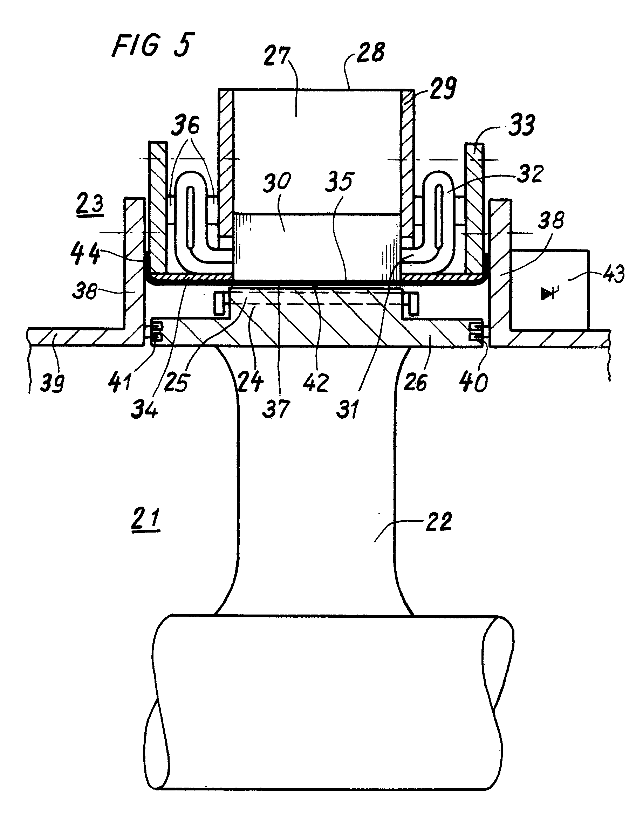

Der konstruktiv abgewandelte, in Fig. 5 dargestellte Turbinensatz besteht aus der Propellerturbine 21 mit den feststehenden Laufschaufeln 22 und dem Generator 23 asynchroner Bauart, dessen Läufer 24 mit der Käfigwicklung 25 unmittelbar von dem Aussenkranz 26 der Propellerturbine 21 getragen wird. Sowohl der Läufer 24 als auch der Aussenkranz 26 sind massiv ausgebildet.

Der Ständer 27 des Generators 23 besteht aus dem Gehäuse 28, dessen Ringwände 29 das Ständerblechpaket 30 tragen mit der Ständerwicklung 31. Um die axiale Länge des Ständers 27 kleinzuhalten, ist der Wickelkopf 32 der Ständerwicklung 31 um 90° abgekröpft und verläuft somit parallel zu den Stirnflächen des Ständerblechpaketes 30 und den Ringwänden 29. Aussen vor dem Wickelkopf 32 liegt jeweils eine Ringscheibe 33, die sich bis zu einem seitlich am Ständerblechpaket 30 anschliessenden Ring 34 aus unmagnetischem Stahl erstreckt. Der Durchmesser der Innenbohrung 35 des Ständerblechpaketes 30 entspricht dem Innendurchmesser des Ringes 34, beide bilden somit die Innenseite des Ständers 27. Die Ringwände 29 des Gehäuses 28, der Ring 34 und die Ringscheibe 33 sind miteinander verbunden, um einen steifen Rahmen zu bilden. Der Wickelkopf 32 ist diesem gegenüber noch durch Stützelemente 36 aus Kunststoff versteift.

Weiterhin ist die Innenseite des Ständers 27 mit einem wasserdichten Mantel 37 aus unmagnetischem und elektrisch nicht leitendem Material beschichtet, dessen Ränder 44 noch über die äusseren Ringscheiben 33 gezogen sind. Dieser wasserdichte Mantel 37 besteht aus glasfaserverstärktem Kunstharz.

Der gesamte Ständer 27 des Generators 23 ist mit Hilfe von nicht dargestellten Befestigungsmitteln an den Flanschen 38 des Turbinenrohres 39 befestigt. Der Ständer 23 ist somit wasserdicht in das Turbinenrohr 39 eingeflanscht und begrenzt den Triebwasserraum. Der Wasserdruck wird an dieser Stelle durch das Ständerblechpaket 30 und die Ringe 34 aufgenommen, nicht durch den Mantel 37, der im wesentlichen nur die wasserdichte Abdichtung bewirkt. Der Läufer 24 des Generators 23 mit seiner Käfigwicklung 25 liegt mithin im Triebwasserraum und wird vom Wasser umströmt. Es sind lediglich zwischen den Flanschen 38 und den Stirnflächen 40 des Aussenkranzes 26 Labyrinthdichtungen 41 vorgesehen, die das Eindringen grober Fremdkörper in den Luftspalt 42 des Generators 23 verhindern und die nicht durch die Laufschaufeln 22 fliessende Wassermenge einschränken. Die während des Betriebes des Generators 23 in der Käfigwicklung 25 auftretenden Wärmeverluste werden in einfachster Weise vom Triebwasser abgeführt.

Die Ständerwicklung 31 des Generators 23 speist über den frequenzregelbaren Direktumrichter 43 und Transformatoren das Netz mit der konstanten Frequenz. Infolge der Frequenzregelbarkeit des Direktumrichters 43 kann der Generator 23 und die mit ihm verbundene Propellerturbine 21 in der Drehzahl stufenlos frei verändert werden, so dass an der Propellerturbine 21 für jede Belastung und für jede Gefällshöhe die optimale Drehzahl eingestellt werden kann. Man hat somit auch bei Teillasten trotz Verwendung der mechanisch sehr robusten Propellerturbine 21 mit nichtregelbaren Laufschaufeln 22 einen sehr guten Wirkungsgrad bei Teillastbetrieb.

## Patentansprüche

1. Turbinensatz mit einer von Wasser durchflossenen Turbine mit nicht verstellbaren Laufschaufeln (Propellerturbine), die mit einem Generator gekuppelt ist, der über einen frequenzregelbaren Stromrichter ein Netz konstanter Frequenz von 50 oder 60 Hz speist, wobei die Drehzahl des Turbinensatzes stufenlos entsprechend dem optimalen Wirkungsgrad bei der abzugebenden elektrischen Leistung und den hydraulischen Verhältnissen einstellbar ist, dadurch gekennzeichnet, dass der Generator (11) mit einer Frequenz kleiner als 20 Hz betrieben wird und dass der Stromrichter als frequenzregelbarer Direktumrichter (13) ausgebildet ist.

2. Turbinensatz nach Anspruch 1, dadurch gekennzeichnet, dass in einem Rohrturbinensatz die Propellerturbine (3) auf dem Aussenkranz (7) des Laufrades (4) den Läufer (10) des Generators (11) trägt.

3. Turbinensatz nach Anspruch 1, dadurch gekennzeichnet, dass in einem Rohrturbinensatz der Generator (11) in einem Strömungskörper (17) angeordnet und mit der Welle (18) der Propellerturbine (3) verbunden ist.

4. Turbinensatz nach Anspruch 1, dadurch gekennzeichnet, dass die Propellerturbine (3) eine vertikale Welle (19) aufweist, die mit der vertikalen Welle des Generators (11) gekuppelt ist.

5. Turbinensatz nach einem der Ansprüche 2 bis 4, dadurch gekennzeichnet, dass der Generator (11) in asynchroner Bauart ausgeführt ist.

6. Turbinensatz nach Anspruch 2 und 5, dadurch gekennzeichnet, dass der Läufer (24) des Generators (23) eine Käfigwicklung (25) aufweist und dass der Ständer (27) auf der Innenseite mit einem wasserdichten Mantel (37) aus unmagnetischem und elektrisch nicht leitfähigem Material versehen und wasserdicht in das Turbinenrohr (39) eingeflanscht ist.

7. Turbinensatz nach Anspruch 6, dadurch gekennzeichnet, dass der wasserdichte Mantel (37) des Ständers (27) aus glasfaserverstärktem Kunststoff besteht.

8. Turbinensatz nach Anspruch 6 oder 7, dadurch gekennzeichnet, dass der Wickelkopf (32) der Wicklung (31) des Ständers (27) um 90° abgekröpft ist.

9. Turbinensatz nach Anspruch 6, dadurch gekennzeichnet, dass der Läufer (24) des Generators (23) massiv ausgebildet ist.

10. Turbinensatz nach Anspruch 6 oder 8, dadurch gekennzeichnet, dass zwischen dem Aussenkranz (26) der Propellerturbine (21) und den Flanschen (38) des Turbinenrohres (39) berührungslose Dichtungen (41) angeordnet sind.

## Claims

1. A turbine set with a turbine traversed by water and having non-adjustable rotor blades (propeller turbine), which is coupled to a generator which feeds a network of constant frequency of 50 or 60 Hz via a frequency-regulatable static converter, where the rotational speed of the turbine set is steplessly adjustable for optimum efficiency at the electric power to be output for the hydraulic conditions, characterised in that the generator (11) is operated at a frequency of less than 20 Hz and that the static converter consists of a frequency-regulatable d.c. converter (13).

2. A turbine set as claimed in Claim 1, characterised in that in a tubular turbine set the propeller turbine (3) bears the rotor (10) of the generator (11) on the outer rim (7) of the impeller (4).

3. A turbine set as claimed in Claim 1, characterised in that in a tubuiar turbine set the generator (11) is arranged in a flow body (17) and is connected to the shaft (18) of the propeller turbine (3).

4. A turbine set as claimed in Claim 1, characterised in that the propeller turbine (3) has a vertical shaft (19) which is coupled to the vertical shaft of the generator (11).

5. A turbine set as claimed in one of Claims 2 to 4, characterised in that the generator (11) is of asynchronous construction.

6. A turbine set as claimed in Claim 2 and 5, characterised in that the rotor (24) of the generator (23) has a cage winding (25), and that on its interior the stator (27) is provided with a water-tight casing (37) of non-magnetic and electrically nonconductive material flanged into the turbine tube (39) in watertight fashion.

7. A turbine set as claimed in Claim 6, characterised in that the water-tight casing (37) of the stator (27) consists of synthetic resin material reinforced with glass-fibre.

8. A turbine set as claimed in Claim 6 or 7, characterised in that the winding head (32) of the winding (31) of the stator (27) is offset by 90°.

9. A turbine set as claimed in Claim 6, characterised in that the rotor (24) of the generator (23) is of solid construction.

10. A turbine set as claimed in Claim 6 or 8, characterised in that contact-free seals (41) are arranged between the outer rim (26) of the propeller turbine (21) and the flanges (38) of the turbine tube (39).

## Revendications

1. Turbo-alternateur comportant une turbine traversée par de l'eau, possédant des aubes non orientables (turbine à hélice) et qui est accouplée à une génératrice qui alimente, par l'intermédiaire d'un convertisseur statique à fréquence réglable, un réseau à fréquence constante égale à 50 ou 60 Hz, la vitesse de rotation du turbo-alternateur pouvant être réglée de façon continue en fonction du rendement optimal pour la puissance électrique devant être fournie et pour les conditions hydrauliques qui se présentent, caractérisé par le fait que la génératrice (11) fonctionne à une fréquence inférieure à 20 Hz et que le convertisseur statique est réalisé sous la forme d'un convertisseur direct (13) à fréquence réglable.

2. Turbo-alternateur suivant la revendication 1, caractérisé par le fait que dans un groupe-bulbe immergé la turbine à hélice (3) porte, sur la couronne extérieure (7) de la roue mobile (4), le rotor (10) de la génératrice (11).

3. Turbo-alternateur suivant la revendication 1, caractérisé par le fait que dans un groupe-bulbe immergé, la génératrice (11) est disposée dans un corps profilé (17), relié à l'arbre (18) de la turbine à hélice (3).

4. Turbo-alternateur suivant la revendication 1, caractérisé par le fait que la turbine à hélice (3) possède un arbre vertical (19) qui est accouplé à l'arbre vertical de la génératrice (11).

5. Turbo-alternateur suivant l'une des revendications 2 à 4, caractérisé par le fait que la génératrice (11) est du type asynchrone.

6. Turbo-alternateur suivant les revendications 2 et 5, caractérisé par le fait que le rotor (24) de la génératrice (23) possède un enroulement à cage d'écureuil (25) et que le stator (27) est muni, sur sa face intérieure, d'une enveloppe (37) étanche à l'eau et constituée en un matériau amagnétique et électriquement non conducteur, et est bridé d'une manière étanche à l'eau dans le tube de turbine (39).

7. Turbo-alternateur suivant la revendication 6, caractérisé par le fait que l'enveloppe étanche à l'eau (37) du stator (27) est constituée en une matière plastique renforcée par des fibres de verre.

8. Turbo-alternateur suivant la revendication 6 ou 7, caractérisé par le fait que la tête de bobine (32) de l'enroulement (31) du stator (27) est coudée à 90°.

9. Turbo-alternateur suivant la revendication 6, caractérisé par le fait que le rotor (24) de la génératrice (23) est massif.

10. Turbo-alternateur suivant la revendication 6 ou 8, caractérisé par le fait que des garnitures d'étanchéité sans contact (41) sont disposées entre la couronne extérieure (26) et la turbine à hélice (21) et les brides (38) du tube de turbine (39).

0 033 847

FIG 1

FIG 2

50 Hz

50 Hz

7

FIG 3

FIG 4

FIG 5